# EUROPÄISCHE PATENTSCHRIFT

(11) **EP 0 797 857 B1**
(45) Veröffentlichungstag und Bekanntmachung des Hinweises auf die Patenterteilung: **02.09.1998**
(21) Anmeldenummer: 95939219.2
(22) Anmeldetag: 01.12.1995
(51) Int. Cl.: H02J 17/00

(54) **VERFAHREN UND ANORDNUNG ZUM VERSORGEN EINES ELEKTRISCHEN VERBRAUCHERS MIT EINER GEREGELTEN ELEKTRISCHEN VERSORGUNGSSPANNUNG ODER EINEM GEREGELTEN ELEKTRISCHEN VERSORGUNGSSTROM**
PROCESS AND DEVICE FOR SUPPLYING AN ELECTRIC CONSUMER WITH A REGULATED ELECTRIC VOLTAGE OR CURRENT
PROCEDE ET DISPOSITIF D'ALIMENTATION D'UN CONSOMMATEUR ELECTRIQUE EN TENSION OU EN COURANT ELECTRIQUES REGULES

(30) Priorität: 14.12.1994 DE 4444588; 23.03.1995 DE 19510660
(43) Veröffentlichungstag der Anmeldung: 01.10.1997
(73) Patentinhaber: SIEMENS AKTIENGESELLSCHAFT, 80333 München (DE)
(72) Erfinder: GROSS, Walter, D-91074 Herzogenaurach (DE); UNTERLASS, Franz-Josef, D-91325 Adelsdorf (DE); ECKARDT, Dieter, D-91074 Herzogenaurach (DE)
(86) Internationale Anmeldenummer: DE9501711
(87) Internationale Veröffentlichungsnummer: WO9619028

(56) Entgegenhaltungen:
- DE-A- 4 024 843
- US-A- 4 654 573
- US-A- 5 099 144
- TECHNISCHES MESSEN Bd. 56, Nr. 4, April 1989, MÜNCHEN, Seiten 164 - 170, XP46911 KUNTZ ET AL 'Energie- und Datenübertragung über Lichtwellenleiter bei intelligenten Sensoren'

## Beschreibung

Die Erfindung betrifft ein Verfahren und eine Anordnung zum Versorgen eines elektrischen Verbrauchers mit einer elektrischen Versorgungsspannung oder einem elektrischen Versorgungsstrom. Durch das US-amerikanische Patent US-A-5 099 144 sind ein solches Verfahren und eine solche Anordnung zur optischen Übertragung von Energie bekannt gewerden.

Im allgemeinen werden elektrische Verbraucher über elektrische Leitungen von einer Versorgungsquelle mit einer elektrischen Versorgungsspannung oder einem elektrischen Versorgungsstrom versorgt. Ein Problem können bei einer solchen Versorgung über elektrische Leitungen Potentialdifferenzen zwischen Verbraucher und Quelle bereiten.

Es sind potentialfreie (galvanisch getrennte) Versorgungssysteme für elektrische Sensoren als elektrische Verbraucher bekannt, bei denen die Energie für den Sensor optisch übertragen wird. In einer bekannten Ausführungsform wird das Licht einer Laserdiode über einen Lichtwellenleiter zu einem Photoelementarray übertragen und von dem Array in elektrische Energie für den Sensor umgewandelt. Die Meßdaten des Sensors werden ebenfalls optisch über einen Lichtwellenleiter übertragen. (*"Sensors and Actuators A", Bd. 25 bis 27 (1991), Seiten 475 bis 480*).

Ein Problem bei solchen optischen Energieübertragungssystemen sind Intensitätsschwankungen der Lichtquelle insbesondere infolge von Alterungserscheinungen oder Änderungen in der Umgebungstemperatur. Diese Intensitätsschwankungen der Lichtquelle können über eine Konstantstromregelung für die Lichtquelle oder über eine Messung der abgegebenen optischen Leistung der Lichtquelle durch eine Monitorphotodiode oder ein Monitorphotoelement und Nachregeln des Versorgungsstromes für die Lichtquelle kompensiert werden. Einflüsse von Störgrößen auf die Übertragungsstrecke zwischen Lichtquelle und photoelektrischem Wandler sowie Änderungen des Konvertierungswirkungsgrads des photoelektrischen Wandlers können mit diesen bekannten Regelungen nicht kompensiert werden.

Der Erfindung liegt deshalb die Aufgabe zugrunde, ein Verfahren und eine Anordnung zum Versorgen eines elektrischen Verbrauchers mit einer elektrischen Versorgungsspannung oder einem elektrischen Versorgungsstrom anzugeben, bei denen die genannten Nachteile vermieden werden.

Diese Aufgabe wird gemäß der Erfindung gelöst mit den Merkmalen des Anspruchs 1 bzw. des Anspruchs 6. Die von wenigstens einem Verbraucher benötigte Energie wird in Form elektromagnetischer Strahlung von wenigstens einem Sender zu wenigstens einem Empfänger übertragen. Der Empfänger ist elektrisch mit dem Verbraucher verbunden und wandelt die vom Sender empfangene elektromagnetische Strahlung in eine elektrische Versorgungsspannung oder einen elektrischen Versorgungsstrom für den Verbraucher um. Zum Ausgleich von Intensitätsänderungen in der elektromagnetischen Strahlung oder Änderungen im Umwandlungswirkungsgrad des Senders oder des Empfängers ist nun eine Regelung der Versorgungsspannung bzw. des Versorgungsstroms auf einen vorgegebenen Referenzwert durch Stellen der Sendeleistung des Senders vorgesehen. Regeln der Versorgungsspannung bzw. des Versorgungsstroms als Regelgröße bedeutet, daß die Versorgungsspannung bzw. der Versorgungsstrom gemessen wird, der gemessene, aktuelle Wert (Istwert) der Versorgungsspannung bzw. des Versorgungsstromes mit dem vorgegebenen Referenzwert (Sollwert) verglichen wird und daß die Sendeleistung des Senders so angepaßt (gestellt, gesteuert) wird, daß die Regeldifferenz (Regelabweichung) zwischen der gemessenen Versorgungsspannung bzw. dem gemessenen Versorgungsstrom und dem Referenzwert innerhalb eines vorgegebenen, zumindest den Nullpunkt beinhaltenden Toleranzintervalls zu liegen kommt. Diese Regelung ermöglicht es, unerwünschte Änderungen der Versorgungsspannung bzw. des Versorgungsstromes beispielsweise aufgrund von Störgrößen wie der Temperatur, Alterung von Sender und Empfänger oder Dämpfung in der Übertragungsstrecke zwischen Sender und Empfänger auszugleichen. Dadurch können insbesondere der Energieverbrauch des Senders gesenkt und die Lebensdauer des Senders gesteigert werden, weil die vom Sender abgestrahlte Sendeleistung dem tatsächlichen Bedarf am Verbraucher angepaßt werden kann und keine überschüssige Leistung zum Ausgleich von Störeinflüssen bereitgestellt werden muß.

Eine weitere Lösung der gestellten Aufgabe wird mit den Merkmalen des Anspruchs 21 angegeben.

Vorteilhafte Ausgestaltungen und Weiterbildungen des Verfahrens und der Anordnung gemäß der Erfindung ergeben sich aus den jeweils abhängigen Ansprüchen.

Das Verfahren und die Anordnung sind grundsätzlich zum Versorgen eines beliebigen elektrischen Verbrauchers geeignet, eignen sich jedoch insbesondere zum Versorgen von elektronischen Schaltungen und elektrischen Sensoren oder Aktoren.

Die elektromagnetische Strahlung zum Übertragen der Energie für den Verbraucher kann aus jedem Wellenlängenbereich gewählt werden, für den es geeignete Sender zum Senden der elektromagnetischen Strahlung und Empfänger zum Umwandeln dieser Strahlung in elektrische Energie gibt. In einer ersten, vorteilhaften Ausführungsform wird sichtbares Licht oder Infrarotlicht aus einem Wellenlängenbereich zwischen etwa 400 nm bis etwa 1400 nm verwendet. Als Sender können dann Laser, Laserdioden, Leuchtdioden oder auch andere Lichtquellen gewählt werden. Geeignete Empfänger sind beispielsweise photoelektrische Wandler wie Photodioden, Photoelemente und vorzugsweise Arrays von Photoelementen. Das Licht kann über Lichtwellenleiter oder auch als Freistrahl vom Sender zum Empfänger übertragen werden. In einer zweiten Ausführungsform können auch Funkwellen aus dem Radiofrequenz- oder Mikrowellenspektrum (Radiofunk bzw. Richtfunk) und entsprechende Funksender und Funkempfänger zum Senden bzw. Empfangen dieser Funkwellen verwendet werden.

In einer weiteren vorteilhaften Ausführungsform der Regelung werden zeitlich aufeinanderfolgende, kurze Steuerpulse so lange erzeugt, wie die Regeldifferenz zwischen der gemessenen Versorgungsspannung oder dem gemessenen Versorgungsstrom und dem Referenzwert kleiner als Null ist und damit zu klein ist. In Abhängigkeit vom zeitlichen Integral der Steuerpulse innerhalb eines vorgegebenen Zeit fensters wird nun von einem Leistungssteller über einen Steuerstrom die Sendeleistung des Senders erhöht, um die zu stark abgefallene Versorgungsspannung bzw. den Versorgungsstrom wieder anzuheben.

Zum Erzeugen der Steuerpulse wird vorzugsweise zunächst von einer Komparatorschaltung ein binäres Komparatorsignal erzeugt, das die Information über das Vorzeichen der Regeldifferenz enthält. Das Komparatorsignal nimmt seinen ersten logischen Zustand an, wenn die Regeldifferenz zwischen dem gemessenen Wert der Versorgungsspannung bzw. des Versorgungsstromes und dem von einem Referenzwertgeber bereitgestellten Referenzwert kleiner als Null ist, und seinen zweiten logischen Zustand an, wenn die Regeldifferenz größer oder gleich Null ist. Dieses binäre Komparatorsignal wird Mitteln zum Erzeugen der Steuerpulse zugeführt, die elektrische Steuerpulse dann erzeugen, wenn das Komparatorsignal in seinem ersten logischen Zustand ist. In einer Ausführungsform umfassen diese Mittel zum Erzeugen der Steuerpulse einen astabilen Multivibrator, an dessen Eingang das Komparatorsignal angelegt wird und an dessen Ausgang eine Folge von Steuerpulsen abgegriffen werden kann, solange das Komparatorsignal in seinem ersten logischen Zustand ist. In einer anderen Ausführungsform umfassen die Mittel zum Erzeugen der Steuerpulse Mittel zum Modulieren der Strahlung des Senders mit regelmäßigen Pulsen, eine mit dem Empfänger elektrisch verbundene Filtereinheit zum Herausfiltern dieser Pulse und eine logische Schaltung, beispielsweise ein UND-Gatter, an deren erstem Eingang das Komparatorsignal und an deren zweitem Eingang die Pulse der Filtereinheit angelegt werden. Die logische Schaltung schaltet die Pulse als Steuerpulse an ihren Ausgang, wenn das Komparatorsignal in seinem ersten logischen Zustand ist.

Vorzugsweise werden die elektrischen Steuerpulse der Potentialtrennung wegen als Lichtsignale oder Funksignale von einem Signalsender zu einem Signalempfänger übertragen und wieder in elektrische Pulse umgewandelt. Diese elektrischen Pulse werden dann vorzugsweise in ihrer Pulshöhe und Pulsdauer normiert, beispielsweise mit Hilfe eines monostabilen Multivibrators, und danach einem Integrator zugeführt, der die Pulse zeitlich aufintegriert. Der Ausgangsstrom des Integrators, der dem zeitlichen Integral der Pulse innerhalb eines über die Zeitkonstante des Integrators festgelegten Zeitfensters entspricht, wird als veränderlicher Stellstrom zum Stellen der Sendeleistung des Senders vorgesehen.

In einer besonders vorteilhaften Ausführungsform der Regelung wird zum Übertragen der Regeldifferenz zwischen der Versorgungsspannung oder dem Versorgungsstrom und dem Referenzwert ein pulsweitenmoduliertes Signal (PWM-Signal) verwendet. Der Wert der Regeldifferenz ist dann in der veränderlichen Pulsbreite des PWM-Signals kodiert. Mit diesem PWM-Signal wird die Sendeleistung des Senders gestellt. Der Regler enthält in dieser Ausführungsform neben einem Referenzwertgeber zum Bereitstellen des Referenzwertes und einem Vergleicher zum Ermitteln der Regeldifferenz auch einen PWM-Modulator, der die Regeldifferenz in das PWM-Signal umsetzt.

Durch die Verwendung eines PWM-Modulators, dem die ermittelte Regeldifferenz zwischen gemessener Versorgungsspannung bzw. gemessenem Versorgungsstrom und dem vorgegebenen Referenzwert zugeführt wird, wird im Regler die ermittelte Regeldifferenz in ein PWM-Signal umgewandelt, das zum Sender vorzugsweise potentialfrei übertragen wird. Für diese Übertragung reicht ein Bit aus. Durch die Übertragung des erzeugten PWM-Signals werden gute Stabilitätseigenschaften des Regelkreises erreicht, und das Auftreten von Grenzzyklen wird von vorneherein vermieden. Da mittels des PWM-Signals ein zeitkodiertes Analog-Signal übertragen wird, ist die Verwendung eines PI-Reglers zur Leistungsregelung des Senders möglich. Dadurch wird eine besonders vorteilhafte lineare Regelung der Versorgungsspannung des Verbrauchers realisiert.

In einer vorteilhaften Ausführungsform ist der PWM-Modulator aus einem Modulationsgenerator, einem Vergleicher und einem Komparator aufgebaut. Der positive Eingang des Vergleichers bildet den Eingang des PWM-Modulators. Der negative Eingang des Vergleichers ist mit dem Ausgang des Modulationsgenerators verbunden. Der Komparator ist dem Vergleicher nachgeschaltet. Der Ausgang des Komparators bildet den Ausgang des PWM-Modulators. Der Modulationsgenerator kann insbesondere ein Dreiecksgenerator, ein Sägezahngenerator oder auch ein Generator sein, dessen Modulationssignal unsymmetrisch und dreiecksähnlich sowie aus e-Funktionen aufgebaut ist.

Bei einer besonders vorteilhaften Ausgestaltung des Reglers wird der PWM-Modulator so ausgestaltet, daß dieser nur in einem Bereich um den Referenzwert herum die Regeldifferenz in ein PWM-Signal umsetzt. Dadurch wird eine höhere Auflösung erzielt, wodurch sich eine bessere Regelgüte einstellt.

Bei einer weiteren vorteilhaften Ausgestaltung der Anordnung ist der Ausgang des Empfängers gepuffert. Durch diese Pufferung des Empfängers wird die Stör- und Betriebssicherheit der Last erhöht.

Zur weiteren Erläuterung der Erfindung wird auf die Zeichnung Bezug genommen, in deren
- FIG. 1: ein prinzipieller Aufbau einer Anordnung zum Versorgen eines elektrischen Verbrauchers mit einer elektrischen Versorgungsspannung,
- FIG. 2 und 3: jeweils eine Ausführungsform eines Reglers für eine solche Anordnung,
- FIG. 4: eine Ausführungsform eines Leistungsstellers für eine solche Anordnung
- FIG. 5: eine Ausführungsform einer Anordnung mit PWM-Steuersignalen und
- FIG. 6: eine Ausführungsform eines PWM-Modulators
jeweils schematisch dargestellt sind. Einander entsprechende Teile sind mit denselben Bezugszeichen versehen.

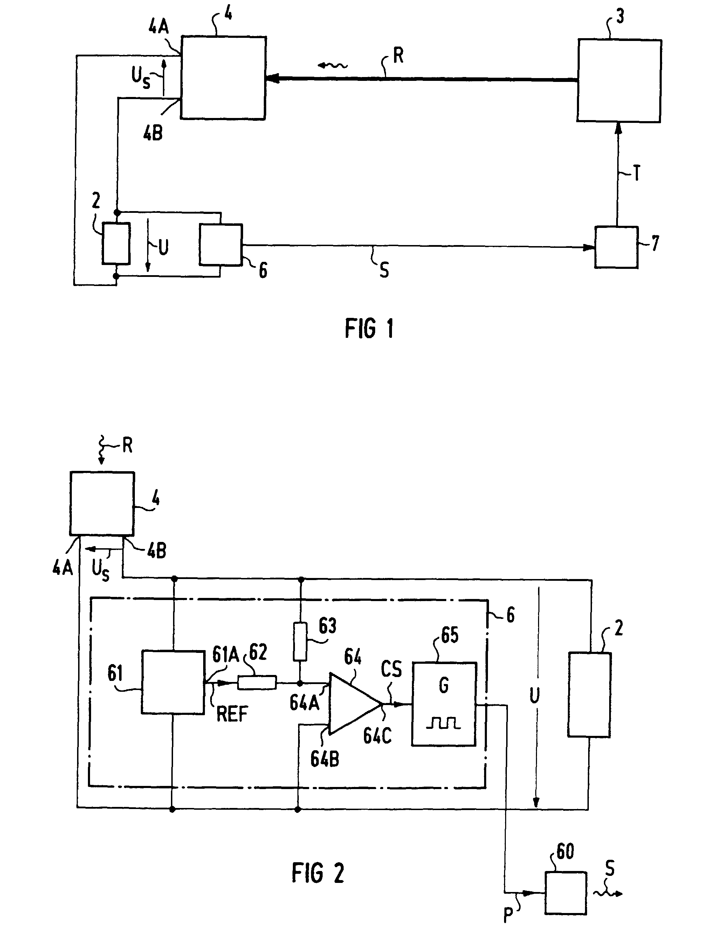

In der FIG. 1 sind ein elektrischer Verbraucher mit 2, ein Sender zum Senden elektromagnetischer Strahlung R mit 3, ein Empfänger zum Empfangen der Strahlung R mit 4, zwei elektrische Anschlüsse des Empfängers mit 4A und 4B, ein Regler mit 6 und ein Leistungssteller mit 7 bezeichnet.

Der Empfänger 4 wandelt die vom Sender 3 empfangene elektromagnetische Strahlung R in eine elektrische Versorgungsspannung Uₛ oder einen elektrischen Versorgungsstrom für den Verbraucher 2 um. Diese Versorgungsspannung Uₛ steht zwischen den zwei Anschlüssen 4A und 4B des Empfängers 4 an, zwischen die der Verbraucher 2 geschaltet ist.

Die Sendeleistung des Senders 3, d.h. die Leistung der abgestrahlten elektromagnetischen Strahlung R, kann vom Leistungssteller 7 gesteuert werden. Der Leistungssteller 7 versorgt den Sender 3 zu diesem Zweck mit einem elektrischen Steuerstrom T, von dem die Sendeleistung des Senders 3 abhängig ist.

Der Regler 6 mißt die Versorgungsspannung U für den Verbraucher 2. Die Versorgungsspannung U wird vorzugsweise wie dargestellt unmittelbar am Verbraucher 2 gemäß einer Vierpolmessung gemessen, um Spannungsabfälle in den Zuleitungen vom Empfänger 4 zum Verbraucher 2 bei der Messung auszuschließen. Die Versorgungsspannung U kann jedoch auch an zwei beliebigen Punkten im Versorgungsstromkreis abgegriffen werden, zwischen die der Verbraucher 2 geschaltet ist. Insbesondere kann auch die zwischen den beiden Anschlüssen 4A und 4B des Empfängers 4 anstehende maximale Versorgungsspannung Uₛ gemessen werden.

Den gemessenen Wert (Istwert) der Versorgungsspannung U vergleicht der Regler 6 mit einem vorgegebenen Referenzwert (Sollwert) REF. Weicht der Istwert der Versorgungsspannung U zu stark von deren Sollwert REF ab, so weist der Regler 6 den Leistungssteller 7 über ein Steuersignal S an, die Sendeleistung des Senders 3 in Abhängigkeit von der Regeldifferenz ΔU = U-REF zwischen Istwert U und Sollwert REF zu verändern. Liegt die Regeldifferenz ΔU = U-REF unterhalb eines vorgegebenen, nicht-positiven Toleranzwertes x1 ≤ 0, d.h. ist die aktuelle Versorgungsspannung U zu klein, so erhöht der Leistungssteller 7 über den Steuerstrom T die Sendeleistung des Senders 3. Überschreitet die Regeldifferenz ΔU = U-REF dagegen einen vorgegebenen, nicht-negativen Toleranzwert x2 ≥ 0, d.h. ist die gemessene Versorgungsspannung U zu groß, so verringert der Leistungssteller 7 vorzugsweise die Sendeleistung des Senders 3. Wenn die Regeldifferenz ΔU = U-REF innerhalb des vorgegebenen Toleranzintervalls [x1, x2] zwischen den beiden Toleranzwerten x1 und x2 liegt, hält der Leistungssteller 7 den Steuerstrom T und damit die Sendeleistung des Senders 3 konstant.

Mit dieser Anordnung ist somit ein Regelkreis realisiert, dessen Regelgröße die Versorgungsspannung U ist und dessen Regelstrecke aus dem Sender 3, der Übertragungsstrecke zwischen Sender 3 und Empfänger 4 sowie dem Empfänger 4 besteht. Alle auf diese Regelstrecke einwirkenden Störgrößen wie beispielsweise Dämpfungsänderungen der Übertragungsstrecke für die elektromagnetische Strahlung R oder Wirkungsgradänderungen von Sender 3 und/oder Empfänger 4 infolge von beispielsweise Temperaturänderungen oder Alterung können mit der Regelung der Versorgungsspannung U für den Verbraucher 2 ausgeglichen werden. Die Stellgröße des Regelkreises ist der Steuerstrom T des Leistungsstellers 7 oder das Steuersignal S des Reglers 6.

Der Regler 6 kann auf verschiedenen Arten realisiert werden und zum Steuern der Sendeleistung des Senders 3 über verschiedene Stellstrecken mit dem Sender 3 in Wirkverbindung stehen.

In FIG. 2 ist eine erste Ausführungsform des Reglers 6 gezeigt. Der Regler 6 enthält einen Referenzwertgeber 61 und eine Komparatorschaltung, die zwei Widerstände 62 und 63 und einen Operationsverstärker 64 umfaßt, sowie einen astabilen Multivibrator 65. Der Referenzwertgeber 61 ist mit dem Empfänger 4 elektrisch verbunden und erzeugt eine vorgegebene, im dargestellten Ausführungsbeispiel negative Referenzspannung als Referenzwert REF, die an einem Ausgang 61A des Referenzwertgebers 61 anliegt. Dieser Ausgang 61A des Referenzwertgebers 61 ist über den ersten Widerstand 62 mit einem ersten Eingang 64A des Operationsverstärkers 64 elektrisch verbunden. Über den zweiten Widerstand 63 ist dieser erste Eingang 64A des Operationsverstärkers 64 mit dem zweiten Anschluß 4B des Empfängers 4 elektrisch verbunden. Der andere Eingang 64B des Operationsverstärkers 64 ist mit dem anderen Anschluß 4A des Empfängers 4 elektrisch verbunden. Im dargestellen Ausführungsbeispiel liegt der zweite Anschluß 4B des Empfängers 4 auf positivem Potential gegenüber einem konstanten Potential, z.B. Nullpotential (Erde), am ersten Anschluß 4A. Bei geeigneter Wahl der Widerstände 62 und 63 und des Operationsverstärkers 64 steht am Ausgang 64C des Operationsverstärkers ein binäres Komparatorsignal CS an, dessen erster logischer Zustand dem Fall entspricht, wenn die Versorgungsspannung U unterhalb ihres Sollwertes REF liegt (ΔU < 0), und dessen zweiter logischer Zustand dem entgegengesetzten Fall entspricht, wenn die Versorgungsspannung U größer als der oder gleich dem Referenzwert REF ist (ΔU ≥ 0). Das binäre Komparatorsignal CS wird dem astabilen Multivibrator 65 zugeführt. Der astabile Multivibrator 65 erzeugt elektrische Pulse P einer vorgegebenen Dauer und in vorgegebenen Abständen, wenn das an seinem Eingang anliegende Komparatorsignal CS in seinem ersten logischen Zustand ist, die Regeldifferenz ΔU = U-REF also kleiner als Null ist.

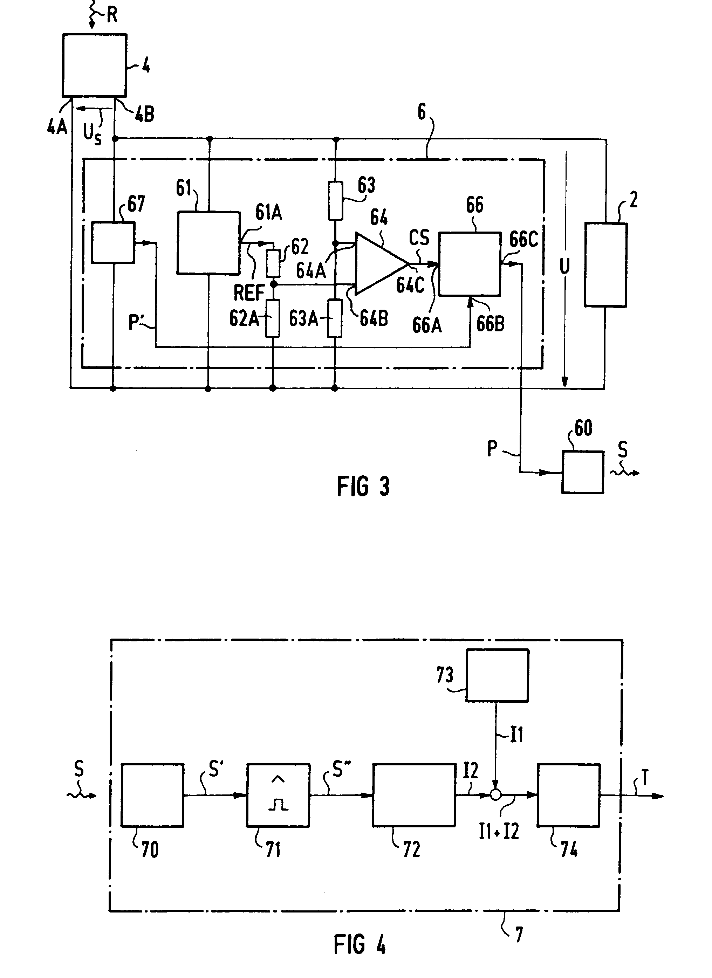

In dem zweiten Ausführungsbeispiel eines Reglers gemäß FIG. 3 umfaßt die Komparatorschaltung des Reglers 6 vier Widerstände 62, 62A, 63 und 63A und wieder einen Operationsverstärker 64. Der erste Eingang 64A des Operationsverstärkers 64 ist über den Widerstand 63 mit dem zweiten Anschluß 4B des Empfängers 4 verbunden und über den Widerstand 63A mit dem ersten Anschluß 4A des Empfängers 4. Der zweite Eingang 64B des Operationsverstärkers 64 ist über den Widerstand 62 mit dem Ausgang 61A des Referenzwertgebers 61 und über den Widerstand 62A mit dem ersten Anschluß 4A des Empfängers 4 elektrisch verbunden. Der Referenzwertgeber 61 liefert in diesem Ausführungsbeispiel eine positive Referenzspannung als Referenzwert REF. Mit der elektromagnetischen Strahlung R werden ferner auch digitale, vorzugsweise rechteckige Pulse zum Empfänger 4 übertragen. Die Strahlung R des Sender 3 wird dazu entsprechend moduliert. Diese Pulse werden von einer zwischen die beiden Anschlüsse 4A und 4B des Empfängers 4 geschalteten Filtereinheit 67 herausgefiltert und als elektrische Pulse P' einem Eingang 66B einer logischen Schaltung 66 zugeführt. An einem anderen Eingang 66A der logischen Schaltung 66 liegt das Komparatorsignal CS des Operationsverstärkers 64 an. Die logische Schaltung 66 schaltet die Pulse P' als Pulse P an ihren Ausgang 66 nur dann durch, wenn das Komparatorsignal CS in seinem ersten logischen Zustand ist, wenn also die gemessene Versorgungsspannung U unterhalb des Referenzwertes REF liegt. Als logische Schaltung 66 kann beispielsweise ein UND-Gatter (AND-GATE) vorgesehen sein.

In den dargestellten, vorteilhaften Ausführungsformen gemäß FIG. 2 und 3 werden die vom Multivibrator 65 bzw. der logischen Schaltung 66 erzeugten elektrischen Pulse P einem Signalsender 60 zugeführt und in elektromagnetische Pulse als Steuersignale S umgewandelt, insbesondere in optische Signale oder Funksignale. Diese elektromagnetischen Steuersignale S können galvanisch getrennt (potentialfrei) übertragen werden.

Die Widerstände 62, 63, 62A bzw. 63A der Komparatorschaltung können feste oder einstellbare, variable Widerstände oder eine Kombination aus beiden sein. Anstelle der in FIG. 2 und 3 gezeigten Komparatorschaltung sind auch andere Komparatorschaltungen zum Vergleich von aktueller Versorgungsspannung U und ihrem Referenzwert REF möglich, die an sich dem Fachmann bekannt sind.

Ferner kann in allen Ausführungsformen auch der Versorgungsstrom für den Verbraucher 2 anstelle der Versorgungsspannung geregelt werden. Der Regler 6 wird dann zum Messen des Versorgungsstroms in Reihe zum Verbraucher 2 geschaltet und umfaßt einen Referenzstromgeber und eine entsprechende Komparatorschaltung zum Vergleichen von Versorgungsstrom und Referenzstrom.

FIG. 4 zeigt eine Ausführungsform des Leistungsstellers 7, die vorteilhaft mit einer der in FIG. 2 und FIG. 3 dargestellten Ausführungsformen des Reglers 6 kombiniert werden kann. Ein Signalempfänger 70 empfängt die elektromagnetischen Steuersignale S des in FIG. 4 nicht dargestellten Signalsenders 60 und wandelt sie in elektrische Pulssignale S' um. Diese elektrischen Pulssignale S' werden einem monostabilen Multivibrator 71 zugeführt, der aus den Pulssignalen S' bezüglich Pulsdauer und Pulshöhe normierte und zeitlich mit einer Flanke der Pulssignale S' synchronisierte Normpulse S" bildet. Diese Normpulse S" werden nun einem Integrator 72 zugeführt. Der Integrator 72 integriert die Normpulse S" über einem vorgegebenen Zeitintervall und stellt an seinem Ausgang einen Integratorstrom I2 zur Verfügung, dessen Stärke dem ermittelten zeitlichen Integral entspricht. Ferner ist eine Stromquelle 73 vorgesehen, die einen konstanten Grundstrom I1 erzeugt. Der Summenstrom I1+I2 aus Grundstrom I1 und Integratorstrom I2 wird einer Stelleinheit 74 zugeführt. Die Stelleinheit 74 liefert den Steuerstrom T für den in FIG. 4 nicht dargestellten Sender 3. Der Steuerstrom T ist um so größer, je größer der Summenstrom I1+I2 am Eingang der Stelleinheit 74 ist.

Eine Regelanordnung gemäß FIG. 1 mit einem Regler 6 gemäß FIG. 2 oder FIG. 3 und einem Leistungssteller 7 gemäß FIG. 4 wird nun vorzugsweise wie folgt betrieben. Der Stelleinheit 74 wird zunächst nur der Grundstrom I1 der Stromquelle 73 zugeführt. Die Stelleinheit 74 versorgt den Sender 3 mit einem entsprechenden Steuerstrom T. Die entsprechende Grundsendeleistung des Senders 3 wird mit der elektromagnetischen Strahlung R zum Empfänger 4 übertragen und dort in eine Grundversorgungsspannung Uₛ=Uₒ umgewandelt. Der Grundstrom I1 wird so eingestellt, daß die Regeldifferenz Uₒ-REF aus dieser Grundversorgungsspannung Uₒ und dem Referenzwert REF kleiner als Null ist, also Uₒ-REF < 0 gilt. Die beiden Toleranzwerte x1 und x2 des Reglers 6 werden vorzugsweise gleich Null eingestellt, d.h. x1=x2=0, so daß das Toleranzintervall nur aus dem Nullpunkt 0 als einzigem Toleranzwert besteht. Weil wegen U ≤ Uₛ = Uₒ nun ΔU = U-REF < x1 = 0 gilt, erzeugt der Regler 6 Steuerpulse S, die zum Leistungssteller 7 übertragen werden. Der Integrator 72 im Leistungssteller 7 erzeugt einen von Null verschiedenen Integratorstrom I2. Die Stelleinheit 74 erhöht daraufhin über den Steuerstrom T die Sendeleistung des Senders 3. Das hat eine Erhöhung der Versorgungsspannung U am Verbraucher 2 zur Folge. Der Regler 6 sendet die Steuersignale S so lange, wie die Regeldifferenz ΔU kleiner Null ist, also ΔU = U-REF < 0 ist. Wenn die Versorgungsspannung U größer oder gleich dem Referenzwert REF ist, also ΔU = U-REF ≥ 0 gilt, sendet der Regler 6 keine Steuersignale S mehr. Der Integratorstrom I2 des Integrators 72 nimmt gemäß der vorgegebenen Zeitkonstanten des Integrators 72 ab. Die Versorgungsspannung U sinkt daraufhin wieder. Sobald die Versorgungsspannung U wieder den Referenzwert REF unterschreitet, d.h. ΔU = U-REF < 0 gilt, beginnt der Regler 6 erneut, über neue Steuersignale S die Sendeleistung des Senders 3 zu erhöhen.

In einer nicht dargestellten Ausführungsform der Regelung der Versorgungsspannung bzw. des Versorgungsstromes für den elektrischen Verbraucher kann auch der von einer Meßeinrichtung gemessene Wert (Istwert) der Versorgungsspannung bzw. des Versorgungsstromes für den Verbraucher digitalisiert werden und als digitales Meßsignal zu einer digitalen Vergleichseinrichtung übertragen werden. Die Übertragung des digitalen Istwerts der Versorgungsspannung bzw. des Versorgungsstromes kann vorzugsweise in Form elektromagnetischer Wellen von einem mit der Meßeinrichtung elektrisch verbundenen Signalsender zu einem mit der Vergleichseinrichtung elektrisch verbundenen Signalempfänger erfolgen. Die digitale Vergleichseinrichtung vergleicht den erhaltenen digitalen Istwert der Versorgungsspannung bzw. des Versorgungsstromes mit einem gespeicherten digitalen Referenzwert. In Abhängigkeit von dem Ergebnis dieses Vergleichs wird dann über den Leistungssteller der Steuerstrom T für den Sender 3 verändert. Beispielsweise wird der Steuerstrom T vergrößert, wenn die Regeldifferenz zwischen dem digitalen Wert der Versorgungsspannung bzw. des Versorgungsspannung und dem digitalen Referenzwert kleiner als ein vorgegebener, nicht-positiver erster Toleranzwert x1 ≤ 0 ist, und verkleinert, wenn diese Regeldifferenz größer als ein vorgegebener, nicht-negativer zweiter Toleranzwert x2 ≥ 0 ist. Liegt die Regeldifferenz dagegen innerhalb des Toleranzintervalls [x1, x2], so wird der Steuerstrom T und damit die Sendeleistung des Senders 3 konstantgehalten. Als Leistungssteller zum Steuern des Steuerstromes T kann dann eine geeignete steuerbare Stromquelle vorgesehen sein.

Der gemessene Istwert der Versorgungsspannung bzw. des Versorgungsstromes kann natürlich auch als Analogwert in Form elektromagnetischer Strahlung zu einer Vergleichseinrichtung, beispielsweise einer Komparatorschaltung oder einem Analog/ Digital-Wandler mit nachgeschalteter digitaler Vergleichseinrichtung übertragen werden.

Um zu vermeiden, daß die Sendeleistung des Senders 3 zu große Werte während der Regelung annimmt, kann zusätzlich eine Schutzeinrichtung vorgesehen sein, die bei einem vorgegebenen Maximalwert der Sendeleistung des Senders 3 oder des Steuerstromes T die Stromversorgung für den Sender 3 unterbricht. Dazu kann eine Überwachung (Monitoring) der Sendeleistung des Senders 3 beispielsweise über eine Monitorphotodiode oder des Steuerstromes T vorgesehen sein.

Zum Übertragen der Energie für den Verbraucher 2 können optische Übertragungssysteme oder auch Funkübertragungssysteme vorgesehen sein. Als optischer Sender 3 kann ein Laser, eine Laserdiode, eine Leuchtdiode oder eine andere Lichtquelle vorgesehen sein. Als optischer Empfänger 4 kann beispielsweise ein Photoelement oder eine Photodiode oder vorzugsweise ein Array aus solchen photoelektrischen Wandlern vorgesehen sein. Die Übertragung des Lichts als elektromagnetische Strahlung R vom Sender 3 zum Empfänger 4 kann über Lichtwellenleiter oder auch über eine Freistrahlanordnung erfolgen. Bei einer Übertragung der Energie über Funkwellen als elektromagnetische Strahlung R können alle geeigneten Funksender als Sender 3 und Funkempfänger als Empfänger 4 verwendet werden.

Auch die Übertragung der Steuersignale S kann über Lichtwellen oder Funkwellen erfolgen. Der Signalsender 60 und der Signalempfänger 70 sind dann jeweils entsprechende optische Komponenten bzw. Funkkomponenten.

In allen Ausführungsformen können auch mehrere Verbraucher 2 von einem oder mehreren Sendern 3 mit Energie versorgt werden. Jedem Verbraucher 2 ist dann ein Empfänger 4 zugeordnet, der die elektromagnetische Strahlung R des wenigstens einen Senders 3 in eine Versorgungsspannung Uₛ oder einen Versorgungsstrom für den elektrischen Verbraucher 2 umwandelt. Mit der elektromagnetischen Strahlung R können in diesem Fall auch Synchronisationssignale zum zeitgleichen Ansteuern der Verbraucher 2 übertragen werden. Der Steuerstrom T des wenigstens einen Senders 3 kann dazu entsprechend moduliert werden.

In einer besonderen Ausführungsform der Anordnung ist als Verbraucher 2 ein elektrischer Sensor vorgesehen, beispielsweise ein Strom- oder Spannungswandler. Die vorzugsweise digitalisierten Meßsignale des Sensors können vorzugsweise über die gleiche Übertragungsstrecke wie die Steuersignale S des Reglers 6 übertragen werden. Es kann in diesem Fall eine logische Schaltung vorgesehen sein, die die Steuersignale S der Regelung, die digitalen Meßsignale und entsprechende Datenkontrollimpulse auf die Übertragungsstrecke zwischen Signalsender 60 und Signalempfänger 70 führt.

Außerdem kann die Übertragungsstrecke zwischen Sender 3 und Empfänger 4 auch bidirektional ausgebildet werden, indem in einem Zeitmultiplex- oder Wellenlängenmultiplexverfahren die Energie und die Meßsignale des Sensors und/oder die Steuersignale S des Reglers 6 zeitlich versetzt bzw. in unterschiedlichen Wellenlängenbereichen übertragen werden.

Der Referenzwert REF für die Regelung der Versorgungsspannung U oder des Versorgungsstromes kann während der Regelung auch angepaßt oder geführt werden, falls der Verbraucher unterschiedliche Leistungsaufnahmen benötigt. REF ist dann im Sprachgebrauch der Regelungstechnik die Führungsgröße des Regelkreises.

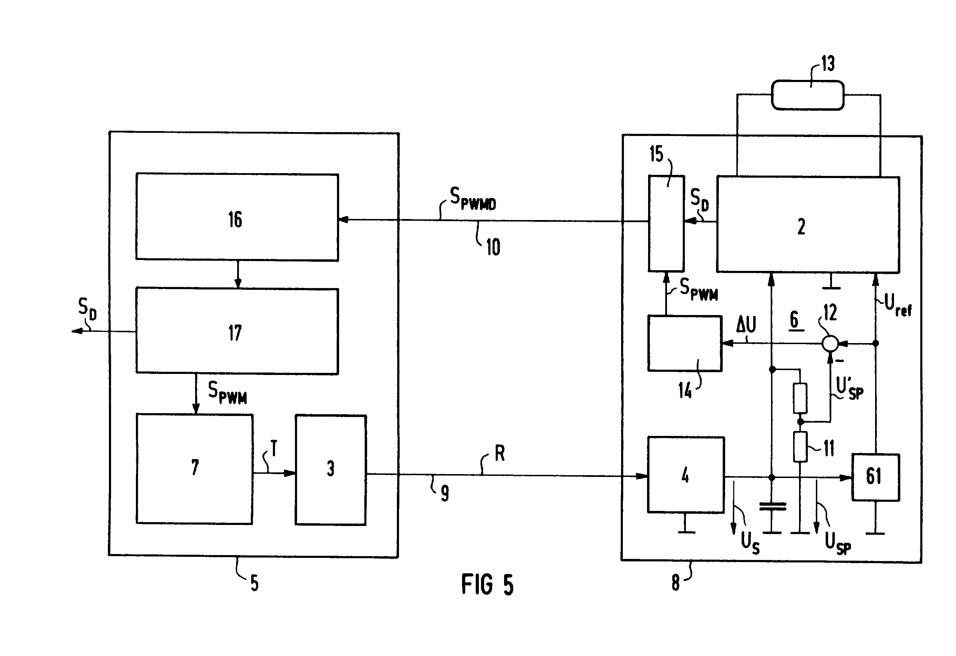

In FIG. 5 ist der prinzipielle Aufbau eines Meßsystems dargestellt, wobei beispielsweise Ströme und Spannungen auf hohem Potential gemessen werden. Die ermittelten Meßwerte müssen jedoch sicher getrennt zu einer Auswerteelektronik 5 übertragen werden. Wie dieser Darstellung zu entnehmen ist, sind die Sensorelektronik 8 und die Auswerteelektronik 5 räumlich voneinander getrennt. Die Potentialtrennung erfolgt über zwei getrennte Lichtwellenleiter 9 und 10. Es ist auch möglich, bei Verwendung unterschiedlicher Wellenlängen, Energie und Daten über einen einzigen Lichtwellenleiter zu übertragen. Als Lichtwellenleiter 9 bzw. 10 kann ein Glasfaseroder ein Kunststoff-Lichtwellenleiter vorgesehen sein. Welcher Typ zum Einsatz kommt, hängt von der Wellenlänge des verwendeten Lichtes ab, da diese die Dämpfung bestimmt. Über den Lichtwellenleiter 9 wird Energie zur Versorgung der Sensorelektronik übertragen. Dazu gibt ein Sender 3 auf der Auswerteelektronik 5 eine elektromagnetische Strahlung R ab, die in einem Empfänger 4, auch als Energiekonverter bezeichnet, wieder in elektrische Energie umgewandelt wird. Ein solcher Energiekonverter 4 ist vom Aufbau ein Photoelement. In der Regel sind mehrere Photo-zellen, beispielsweise GaAs-Photozellen, elektrisch in Reihe geschaltet, um eine höhere Ausgangsspannung zu erzielen. Als Sender 3 wird beispielsweise eine Laserdiode verwendet, die Licht bei einer Wellenlänge von ca. 850 nm abgibt. Die vom Energiekonverter 4 aufgebaut Spannung U_{S} dient direkt, also ohne zusätzliche Spannungsregelung vor Ort, zur Stromversorgung der Sensorelektronik 8. Damit eine sichere Stromversorgung des Verbrauchers 2 gewährleistet ist, ist es ratsam, den Ausgang des Energiekonverters 4 mit einem Kondensator zu puffern. An diesem gepufferten Ausgang steht dann die Versorgungsspannung U_{SP} an.

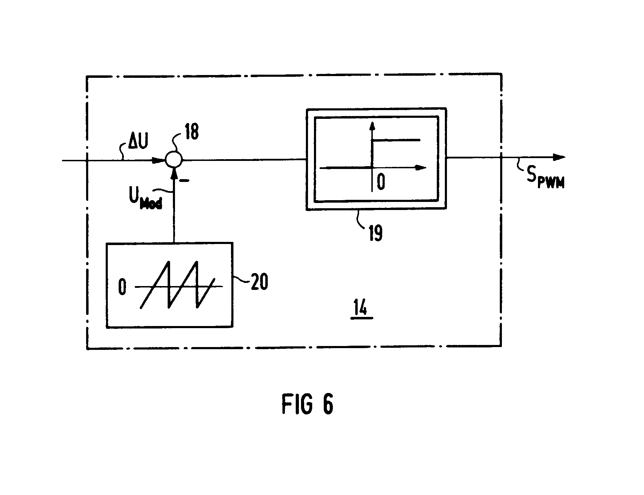

Damit dennoch die Versorgungsspannung U_{SP} konstant gehalten werden kann, ist ein Regler 6, der einen Spannungsteiler 11, einen Vergleicher 12, einen PWM-Modulator 14 und einen Referenzwertgeber 61 aufweist, zur Regelung der Versorgungsspannung U_{SP} vorgesehen. Zunächst wird die Versorgungsspannung U_{SP} gemessen und mit einer Referenzspannung U_{Ref} als Referenzwert REF verglichen. Da die Ausgangsspannung U_{SP} des Energiekonverters 4 die Versorgungsspannung U_{SP} der gesamten Sensorelektronik 8 bildet und somit der Wert der Referenzspannung U_{Ref} kleiner ist als der Wert der Versorgungsspannung U_{SP}, erfolgt in der dargestellten Ausführungsform der Vergleich mit einer mittels des Spannungsteilers 11 heruntergesetzten Ausgangsspannung U_{'SP}. Die Referenzspannung U_{Ref} wird in Abhängigkeit des Referenzwertgebers 61 erzeugt und einerseits einem positiven Eingang des Vergleichers 12 und andererseits dem Verbraucher 2, der beispielsweise aus einem Signalverstärker und einem A/D-Wandler besteht und mit einem Sensor 13 verknüpft ist, zugeführt. Am negativen Eingang dieses Vergleichers 12 steht die Ausgangsspannung U_{'SP} des Spannungsteilers 11 an. Die am Ausgang des Vergleichers 12 anstehende Differenzspannung ΔU, auch als Regeldifferenz ΔU bezeichnet, wird dem PWM-Modulator 14 zugeführt. Der Aufbau des PWM-Modulators 14 ist als Blockschaltbild in der FIG. 6 näher dargestellt. Der Ausgang dieses PWM-Modulators 14 ist mit einer digitalen Mischeinrichtung 15, beispielsweise einem Multiplexer, verbunden. Der weitere Eingang dieser digitalen Mischeinrichtung 15 ist mit dem Ausgang des Verbrauchers 2, insbesondere mit seinem A/D-Wandler verbunden. Mittels dieser digitalen Mischeinrichtung 15 wird das erzeugte PWM-Signal S_{PWM} des PWM-Modulators 14 zusammen mit dem Datensignal S_{D} des Verbrauchers 2 als Mischsignal S_{PWMD} mittels des Lichtwellenleiters 10 zur Auswerteelektronik 5 übertragen.

Dort wird das Mischsignal S_{PWMD} wieder in das Datensignal S_{D} und das PWM-Signal S_{PWM} getrennt. Während das Datensignal S_{D} an einen Prozessor weitergeleitet wird, wird das PWM-Signal S_{PWM} als Eingangssignal an einen Leistungssteller 7 gelegt, der die Leistung des Senders 3 so ändert, daß die Spannung U_{S} bzw. U_{SP}, die der Energiekonverter 4 aufbaut, konstant gehalten wird. Zur Trennung des Datensignals S_{D} des Verbrauchers 2 vom PWM-Signal S_{PWM} des PWM-Modulators 14 wird ein Demodulator 16 verwendet, der ausgangsseitig mit einem Interface 17 verbunden ist. Am Interface 17 kann zur weiteren Verarbeitung des Datensignals S_{D} des Verbrauchers 2 ein Prozessor vorgesehen sein. Außerdem ist am Interface 17 der Leistungssteller 7 angeschlossen. Als Leistungssteller 7 ist beispielsweise ein PI-Regler vorgesehen, da mittels des PWM-Signals S_{PWM} ein zeitcodiertes Analog-Signal übertragen wird. Durch die Übertragung einer quasianalogen Regeldifferenz ΔU für die Versorgungsspannung U_{SP} kann eine Regelung mit besonders guten Eigenschaften realisiert werden.

Durch die Verwendung des PWM-Modulators 14, wodurch die Regeldifferenz ΔU mittels eines PWM-Signals S_{PWM} übertragen wird, treten bei der Spannungsregelung keine Grenzzyklen auf, wodurch die Laserdiode 3 nicht so stark belastet wird. Außerdem verbessern sich die Stabilitätseigenschaften des Regelkreises. Schließlich können mit dieser dargestellten Ausführungsform auch schnellere Störungen, wie eine unterschiedliche Stromaufnahme des Verbrauchers 2 oder Störungen des Laserstroms, bekämpft werden.

Die FIG. 6 zeigt das Blockschaltbild einer Ausführungsform des PWM-Modulators 14 der Sensorelektronik 8 der FIG. 5. Dieser PWM-Modulator 14 enthält einen Vergleicher 18, einen Komparator 19 und einen Modulations-Generator 20. Der positive Eingang des Vergleichers 18 bildet den Eingang des Modulators 14, wobei der Ausgang des Komparators 19 den Ausgang des Modulators 14 bildet. Der negative Eingang des Vergleichers 18 ist mit dem Ausgang des Modulationsgenerators 20 verbunden, wobei der Ausgang dieses Vergleichers 18 mit dem Eingang des Komparators 19 verknüpft ist. Als Modulationsgenerator 20 ist ein Sägezahngenerator vorgesehen. Anstelle des Sägezahns als Modulationsspannung U_{Mod} kann auch eine andere periodische Modulationsspannung U_{Mod}, beispielsweise ein Dreieck, verwendet werden. Ferner kann der Modulationsgenerator auch ein unsymmetrisches und dreiecksähnliches Modulationssignal erzeugen, das aus Exponentialfunktionen (e-Funktionen) aufgebaut ist. Der PWM-Modulator 14 wird vorteilhaft so ausgestaltet, daß dieser nur in einem Bereich um die gewünschte Spannung U*=U_{Ref} herum die Spannungsdifferenz in ein PWM-Signal S_{PWM} umsetzt. Dadurch wird eine höhere Auflösung erzielt und damit eine bessere Regelgüte. Über die Amplitude der Modulationsspannung U_{Mod} kann der angesprochene Modulationsbereich für die ermittelte Regeldifferenz ΔU eingestellt werden.

Durch die Ausgestaltung des Reglers 6 der Sensorelektronik 8 gemäß den FIG. 5 und 6, wodurch die ermittelte Regeldifferenz ΔU mit Hilfe eines PWM-Signals S_{PWM} übertragen wird, werden gute Stabilitätseigenschaften des Regelkreises zur Regelung der Versorgungsspannung U_{SP} des Verbrauchers 2 erreicht. Für diese Art der Übertragung reicht nur ein Bit aus. Da mit dem PWM-Signal S_{PWM} ein zeitcodiertes Analogsignal übertragen wird, kann ein PI-Regler als Leistungssteller 7 für die Leistungssteuerung des Senders 3 der Auswerteelektronik 5 verwendet werden, so daß ein lineare Regelung realisiert ist.

Außerdem kann am Strom, der durch die Laserdiode 3 fließt, der Alterungszustand des Energieübertragungssystems abgelesen werden, da die Versorgungsspannung der Sensorelektronik 8 geregelt wird. Dazu muß der aktuell fließende Strom nur in Bezug zu dem Strom gesetzt werden, der bei der Inbetriebnahme des Sensorsystems geflossen ist. Dabei setzt man allerdings voraus, daß die Alterung des Senders 3 bestimmend für die Alterung des gesamten Sensorsystems ist.

Durch die Überwachung des Laserdiodenstromes kann somit eine Wartungsinformation generiert werden.

Eine Fehlerquelle, mit der immer gerechnet werden muß, ist die Zerstörung eines der beiden Lichtwellenleiter 9 und 10. Dadurch wird immer der Datenstrom, der vom Verbraucher 2 an die Auswerteelektronik 5 gesendet wird, unterbrochen, da entweder die Stromversorgung in der Sensorelektronik 8 zusammenbricht oder direkt die Sendeinformation ausfällt. Ein solcher Ausfall des Datenstromes kann aber in einfacher Weise in der Auswerteelektronik 5 detektiert werden.

In einem solchen Fall muß dann der Sender 3 abgeschaltet werden, da an der Bruchstelle sonst unsichtbares, energiereiches Licht austritt, das zu Augenschäden führen kann. Das entsprechende Abschaltsignal ergibt sich aus der Überwachung der Kontinuität des Datenstromes.

## Patentansprüche

1. Verfahren zum Versorgen eines elektrischen Verbrauchers (2) mit einer elektrischen Versorgungsspannung (U) oder einem elektrischen Versorgungsstrom, bei dem
a) elektromagnetische Strahlung (R) eines Senders (3) zu einem Empfänger (4) übertragen wird und vom Empfänger (4) in die elektrische Versorgungsspannung (U) oder den elektrischen Versorgungsstrom für den Verbraucher (2) umgewandelt wird,
b) die Versorgungsspannung (U) bzw. der Versorgungsstrom durch Stellen der Sendeleistung des Senders (3) auf einen vorgegebenen Referenzwert (REF) geregelt wird,
c) die Sendeleistung des Senders (3) in Abhängigkeit von der Regeldifferenz (ΔU) aus der Versorgungsspannung (U) bzw. dem Versorgungsstrom und dem Referenzwert (REF) eingestellt wird.

2. Verfahren nach Anspruch 1, bei dem zeitlich aufeinanderfolgende Steuerpulse (P, S) vorgegebener Dauer erzeugt werden und die Sendeleistung des Senders (3) in Abhängigkeit von dem zeitlichen Integral dieser Steuerpulse (P,S) innerhalb eines vorgegebenen Zeit fensters erhöht wird, wenn die Regeldifferenz zwischen der Versorgungsspannung (U) bzw. dem Versorgungsstrom und dem Referenzwert (REF) kleiner als Null ist.

3. Verfahren nach Anspruch 1, bei dem ein pulsweitenmoduliertes Steuersignal (S_{PWM}), das die Information über die Regeldifferenz (ΔU) enthält, zum Stellen der Sendeleistung des Senders (3) verwendet wird.

4. Verfahren nach einem der vorhergehenden Ansprüche, bei dem elektromagnetische Strahlung (R) aus einem Wellenlängenbereich zwischen etwa 400 nm und etwa 1400 nm verwendet wird.

5. Verfahren nach einem der Ansprüche 1 bis 3, bei dem als elektromagnetische Strahlung (R) Funkwellen verwendet werden.

6. Anordnung zum Versorgen eines elektrischen Verbrauchers (2) mit einer elektrischen versorgungsspannung (U) oder einem elektrischen Versorgungsstrom, mit
a) einem Sender (3) zum Senden elektromagnetischer Strahlung (R),
b) einem Empfänger (4) zum Umwandeln der vom Sender (3) empfangenen elektromagnetischen Strahlung in die elektrische Versorgungsspannung (U) oder den elektrischen Versorgungsstrom für den Verbraucher (2),
c) einem Regler (6), der die Versorgungsspannung (U) bzw. den Versorgungsstrom durch Stellen der Sendeleistung des Senders (3) auf einen vorgegebenen Referenzwert (REF) regelt
d) einem Leistungssteller (7), der die Sendeleistung des Senders (3) in Abhängigkeit von der Regeldifferenz (ΔU) aus der Versorgungsspannung (U) bzw. dem Versorgungsstrom und dem Referenzwert (REF) einstellt.

7. Anordnung nach Anspruch 6, bei der der Verbraucher (2) einen Sensor (13) enthält.

8. Anordnung nach Anspruch 6 oder Anspruch 7, bei der
a) der Regler (6)
a1) einen Referenzwertgeber (61) zum Bereitstellen des Referenzwertes (REF),
a2) eine mit dem Referenzwertgeber (61) elektrisch verbundene Komparatorschaltung (62,62A, 63, 63A, 64) zum Messen der Versorgungsspannung (U) bzw. des Versorgungsstromes und Vergleichen des gemessenen Wertes mit dem Referenzwert (REF) sowie zum Ableiten eines binären Komparatorsignals (CS), das seinen ersten ersten logischen Zustand annimmt, wenn der gemessene Wert der Versorgungsspannung (U) bzw. des Versorgungsstromes kleiner als der Referenzwert (REF) ist, und seinen zweiten logischen Zustand annimmt, wenn der gemessene Wert der Versorgungsspannung (U) bzw. des Versorgungsstromes größer oder gleich dem Referenzwert (REF) ist, und
a3) mit der Komparatorschaltung (62,62A,63,63A,64) elektrisch verbundene Mittel zum Erzeugen von Steuerpulsen (P), wenn das Komparatorsignal (CS) in seinem ersten Zustand ist,
enthält und bei der
b) ein Leistungssteller (7) vorgesehen ist, der mit dem Regler (6) über eine Übertragungsstrecke zum Übertragen der Steuerpulse (P,S) verbunden ist und den Sender (3) mit einem Steuerstrom (T) zum Steuern von dessen Sendeleistung versorgt, wobei der Steuerstrom (T) von einem zeitlichen Integral der vom Regler (6) erhaltenen Steuerpulse (P,S) in einem vorgegebenen Zeitfenster abhängt.

9. Anordnung nach Anspruch 8, bei der der Leistungssteller (7) einen Integrator (72) enthält, der einen dem zeitlichen Integral entsprechenden Integratorstrom (I2) erzeugt, der wenigstens einen Teil des Steuerstromes (T) des Leistungsstellers (7) bildet.

10. Anordnung nach Anspruch 7 und einem der Ansprüche 8 und 9, bei der eine gemeinsame Übertragungsstrecke zum Übertragen sowohl der Steuerpulse (S) als auch von Meßsignalen des Sensors in Form elektromagnetischer Signale vorgesehen ist.

11. Anordnung nach Anspruch 6, bei der der Regler (6) einen Referenzwertgeber (61), der den Referenzwert (U_{ref}) bereitstellt, einen Vergleicher (11), der die Regeldifferenz (ΔU) aus der Versorgungsspanunnung (U_{'SP}) bzw. dem Versorgungsstrom und dem Referenzwert (U_{ref}) ermittelt, und einen PWM-Modulator (14) enthält, der die Regeldifferenz (ΔU) in ein pulsweitenmoduliertes Signal (S_{PWM}) zum Stellen der Sendeleistung des Senders (3) umsetzt.

12. Anordnung nach Anspruch 11, bei der der PWM-Modulator (14) einen Modulationsgenerator (20), einen Vergleicher (18) und einen Komparator (19) enthält, wobei der positive Eingang des Vergleichers (18) den Eingang und der Ausgang des dem Vergleicher (18) nachgeschalteten Komparators (19) den Ausgang des PWM-Modulators (14) bilden und wobei der negative Eingang des Vergleichers (18) mit dem Ausgang des Modulationsgenerators (20) verbunden ist.

13. Anordnung nach Anspruch 12, bei der die Amplitude der generierten Modulationsspannung (U_{Mod}) des Modulationsgenerators (20) derart einstellbar ist, daß der PWM-Modulator (14) nur in einem Bereich um den vorgegebenen Referenzwert (U_{Ref}) ein PWM-Steuersignal (S_{PWM}) generiert.

14. Anordnung nach Anspruch 12 oder Anspruch 13, bei der als Modulationsgenerator (20) ein Sägezahngenerator vorgesehen ist.

15. Anordnung nach Anspruch 12 oder Anspruch 13, bei der als Modulationsgenerator (20) ein Dreiecksgenerator vorgesehen ist.

16. Anordnung nach Anspruch 12 oder Anspruch 13, bei der als Modulationsgenerator ein Generator vorgesehen ist, der ein Modulationssignal generiert, das unsymmetrisch und dreieckähnlich ist, und aus e-Funktionen besteht.

17. Anordnung nach einem der Ansprüche 11 bis 16, bei der der Regler (6) einen Spannungsteiler (11) enthält, der mit dem Empfänger (4) und dem Vergleicher (12) verbunden ist und dessen gegenüber der Ausgangsspannung (U_{SP}) des Empfängers (4) heruntergesetzte Ausgangsspannung (U_{'SP}) an dem negativen Eingang des Vergleichers (12) ansteht.

18. Anordnung nach Anspruch 7 und einem der Ansprüche 11 bis 17, bei der eine mit einem Ausgang des PWM-Modulators (14) und einem Ausgang des Verbrauchers (2) verbundene digitale Mischeinrichtung (15) vorgesehen ist, die aus wenigstens einem Datensignal (S_{D}) des Verbrauchers (2) und dem PWM-Signal (S_{PWM}) des PWM-Modulators (14) ein Mischsignal (S_{PWMD}) erzeugt.

19. Anordnung nach Anspruch 18, bei der als digitale Mischeinrichtung (15) ein Multiplexer vorgesehen ist.

20. Anordnung nach einem der Ansprüche 6 bis 19, bei der der Ausgang des Empfängers (4) gepuffert ist.

21. Anordnung zum Versorgen eines elektrischen Verbrauchers (2) mit einer elektrischen Verscrgungsspannung (U_{S}) mit
a) einem Sender (3) zum Senden elektromagnetischer Strahlung (R),
b) einem Empfänger (4) zum Umwandeln der vom Sender (3) empfangenen elektromagnetischen Strahlung (R) in die elektrische Versorgungsspannung (U_{S}) für den Verbraucher (2) und
c) einem Regler (6), der die Versorgungsspannung (U_{S}) mißt und deren gemessenen Wert mit einem vorbestimmten Referenzwert (U_{Ref}) vergleicht, sowie in Abhängigkeit dieses Vergleiches ein Steuersignal (S) zum Stellen der Sendeleistung des Senders (3) erzeugt,
bei der der Regler (6) einen Spannungsteiler (11), einen Vergleicher (12) und einen PWM-Modulator (14) enthält, wobei der Spannungsteiler (11) eingangsseitig mit dem Ausgang des Empfängers (4) und ausgangsseitig mit einem negativen Eingang des Vergleichers (12) verknüpft ist, dessen positiver Eingang mit dem Ausgang des Referenzwertgebers (61) und dessen Ausgang mit dem Eingang des PWM-Modulators (14) verknüpft ist, und daß der PWM-Modulator (14) ausgangsseitig mit einer digitalen Mischeinrichtung (15) verbunden ist, deren weiterer Eingang mit dem Verbraucher (2) verknüpft ist und an deren Ausgang ein Mischsignal (S_{PWMD}) ansteht.

## Claims

1. A method of supplying an electric consumer (2) with an electric supply voltage (U) or electric supply current wherein
a) electromagnetic radiation (R) from a transmitter (3) is transmitted to a receiver (4) and converted by the receiver (4) into the electric supply voltage (U) or electric supply current for the consumer (2),
b) the supply voltage (U) or supply current is regulated to a predetermined reference value (REF) by adjusting the transmitting power of the transmitter (3),
c) the transmitting power of the transmitter (3) is adjusted as a function of the control difference (ΔU) between the supply voltage (U) or supply current and the reference value (REF).

2. A method according to Claim 1 wherein consecutive control pulses (P, S) of predetermined duration are generated and the transmitting power of the transmitter (3) is increased as a function of the integral over time of these control pulses (P, S) within a predetermined time window when the control difference between the supply voltage (U) or supply current and the reference value (REF) is less than zero.

3. A method according to Claim 1, wherein a pulse-width-modulated control signal (S_{PWM}) containing the information relating to the control difference (ΔU) is used to adjust the transmitting power of the transmitter (3).

4. A method according to one of the preceding claims wherein electromagnetic radiation (R) from a wavelength range of between approximately 400 nm and approximately 1400 nm is used.

5. A method according to one of Claims 1 to 3 wherein radio waves are used as electromagnetic radiation (R).

6. An arrangement for supplying an electric consumer (2) with an electric supply voltage (U) or an electric supply current comprising
a) a transmitter (3) for the transmission of electromagnetic radiation (R),
b) a receiver (4) for converting the electromagnetic radiation received from the transmitter (3) into the electric supply voltage (U) or electric supply current for the consumer (2),
c) a controller (6) which regulates the supply voltage (U) or supply current to a predetermined reference value (REF) by adjusting the transmitting power of the transmitter (3),
d) a power adjustor (7) which adjusts the transmitting power of the transmitter (3) as a function of the control difference (ΔU) between the supply voltage (U) or supply current and the reference value (REF).

7. An arrangement according to Claim 6 wherein the consumer (2) comprises a sensor (13).

8. An arrangement according to Claim 6 or 7 wherein
a) the controller (6) comprises
a1) a reference value generator (61) for supplying the reference value (REF),
a2) a comparator circuit (62, 62A, 63, 63A, 64), electrically connected to the reference value generator (61), for measuring the supply voltage (U) or supply current and comparing the measured value with the reference value (REF) and for deriving a binary comparator signal (CS) which assumes its first logic state when the measured value of the supply voltage (U) or supply current is smaller than the reference value (REF) and assumes its second logic state when the measured value of the supply voltage (U) or supply current is greater than or equal to the reference value (REF) and
a3) means, electrically connected to the comparator circuit (62, 62A, 63, 63A, 64), for generating control pulses (P) when the comparator signal (CS) is in its first state,
and wherein
b) a power adjustor (7) is provided which is connected to the controller (6) via a transmission link for the transmission of the control pulses (P, S) and supplies the transmitter (3) with a control current (T) for the control of its transmitting power, which control current (T) is dependent upon an integral over time of the control pulses (P, S) obtained from the controller (6) in a predetermined time window.

9. An arrangement according to Claim 8 wherein the power adjustor (7) comprises an integrator (72) which generates an integrator current (I2) which corresponds to the integral over time and which forms at least a part of the control current (T) of the power adjustor (7).

10. An arrangement according to Claim 7 and one of Claims 8 and 9 wherein a common transmission link is provided for the transmission both of the control pulses (S) and measurement signals of the sensor in the form of electromagnetic signals.

11. An arrangement according to Claim 6 wherein the controller (6) comprises a reference value generator (61) which supplies the reference value (U_{ref}) , a comparing element (11) which determines the control difference (ΔU) between the supply voltage (U'_{SP}) or supply current and the reference value (U_{ref}) , and a PWM-modulator (14) which converts the control difference (ΔU) into a pulse-width-modulated signal (S_{PWM}) for the adjustment of the transmitting power of the transmitter (3).

12. An arrangement according to Claim 11 wherein the PWM-modulator (14) comprises a modulation generator (20), a comparing element (18) and a comparator (19), where the positive input of the comparing element (18) forms the input of the PWM-modulator (14) and the output of the comparator (19) connected downstream of the comparing element (18) forms the output of the PWM-modulator (14) and the negative input of the comparing element (18) is connected to the output of the modulation generator (20).

13. An arrangement according to Claim 12 wherein the amplitude of the generated modulation voltage (U_{Mod}) of the modulation generator (20) is adjustable such that the PWM-modulator (14) generates a PWM-control signal (S_{PWM}) only in a range around the predetermined reference value (U_{Ref}).

14. An arrangement according to Claim 12 or 13 wherein a sawtooth generator is provided as modulation generator (20).

15. An arrangement according to Claim 12 or 13 wherein a delta generator is provided as modulation generator (20).

16. An arrangement according to Claim 12 or 13 wherein a generator which generates a modulation signal which is asymmetrical and delta-like and composed of e-functions is provided as modulation generator.

17. An arrangement according to one of Claims 11 to 16 wherein the controller (6) comprises a voltage divider (11) which is connected to the receiver (4) and to the comparing element (12) and whose output voltage (U'_{SP}), which is stepped-down relative to the output voltage (U_{SP}) of the receiver (4), occurs at the negative input of the comparing element (12).

18. An arrangement according to Claim 7 and one of Claims 11 to 17 wherein a digital mixing device (15) is provided which is connected to an output of the PWM-modulator (14) and to an output of the consumer (2) and which produces a mixed signal (S_{PWMD}) from at least one data signal (S_{D}) of the consumer (2) and the PWM-signal (S_{PWM}) of the PWM-modulator (14).

19. An arrangement according to Claim 18 wherein a multiplexer is provided as digital mixing device (15).

20. An arrangement according to one of Claims 6 to 19 wherein the output of the receiver (4) is buffered.

21. An arrangement for supplying an electric consumer (2) with an electric supply voltage (U_{S}) comprising
a) a transmitter (3) for the transmission of electromagnetic radiation (R),
b) a receiver (4) for converting the electromagnetic radiation (R) received from the transmitter (3) into the electric supply voltage (U_{S}) for the consumer (2) and
c) a controller (6) which measures the supply voltage (U_{S}) and compares the measured value of said supply voltage with a predetermined reference value (U_{Ref}) and, in dependence upon this comparison, generates a control signal (S) for adjusting the transmitting power of the transmitter (3),
wherein the controller (6) comprises a voltage divider (11), a comparing element (12) and a PWM-modulator (14), where the voltage divider (11) is connected by its input to the output of the receiver (4) and by its output to a negative input of the comparing element (12), the positive input of which is connected to the output of the reference value generator (61) and the output of which is connected to the input of the PWM-modulator (14), and that the PWM-modulator (14) is connected at its output to a digital mixing device (15) whose other input is connected to the consumer (2) and at whose output a mixed signal (S_{PWMD}) occurs.

## Revendications

1. Procédé pour l'alimentation d'un consommateur électrique (2) en une tension d'alimentation électrique (U) ou en un courant d'alimentation électrique, dans lequel
a) on transmet un rayonnement électromagnétique (R) d'un émetteur (3) à un récepteur (4) et on le convertit au moyen du récepteur (4) en une tension d'alimentation électrique (U) ou en un courant d'alimentation électrique pour le consommateur (2),
b) on régule la tension d'alimentation (U) ou le courant d'alimentation en réglant la puissance d'émission de l'émetteur (3) à une valeur de référence (REF) prescrite,
c) on règle la puissance d'émission de l'émetteur (3) en fonction de la différence de régulation (ΔU) entre la tension d'alimentation (U) ou le courant d'alimentation et la valeur de référence (REF).

2. Procédé selon la revendication 1, dans lequel on produit des impulsions de commande successives (P, S) de durée prescrite et on augmente la puissance d'émission de l'émetteur (3) en fonction de l'intégrale par rapport au temps de ces impulsions de commande (P, S) dans une fenêtre temporelle prescrite lorsque la différence de régulation entre la tension d'alimentation (U) ou le courant d'alimentation et la valeur de référence (REF) est inférieure à zéro.

3. Procédé selon la revendication 1, dans lequel on utilise un signal de commande à modulation d'impulsions en durée (S_{PWM}), qui contient l'information concernant la différence de régulation (ΔU) , pour régler la puissance d'émission de l'émetteur (3).

4. Procédé selon l'une des revendications précédentes, dans lequel on utilise un rayonnement électromagnétique (R) d'une longueur d'onde comprise entre 400 nm environ et 1 400 nm environ.

5. Procédé selon l'une des revendications 1 à 3, dans lequel on utilise des ondes radios comme rayonnement électromagnétique (R).

6. Dispositif pour l'alimentation d'un consommateur électrique (2) en une tension d'alimentation électrique (U) ou en un courant d'alimentation électrique, comportant
a) un émetteur (3) pour émettre un rayonnement électromagnétique (R),
b) un récepteur (4) pour convertir le rayonnement électromagnétique reçu de l'émetteur (3) en une tension d'alimentation électrique (U) ou en un courant d'alimentation électrique pour le consommateur (2),
c) un régulateur (6) qui régule la tension d'alimentation (U) ou le courant d'alimentation en réglant la puissance d'émission de l'émetteur (3) à une valeur de référence (REF) prescrite,
d) un régleur de puissance (7) qui règle la puissance d'émission de l'émetteur (3) en fonction de la différence de régulation (ΔU) entre la tension d'alimentation (U) ou le courant d'alimentation et la valeur de référence (REF).

7. Dispositif selon la revendication 6, dans lequel le consommateur (2) contient un capteur (13).

8. Dispositif selon la revendication 6 ou la revendication 7, dans lequel
a) le régulateur (6) contient
a1) un générateur de valeur de référence (61) pour fournir la valeur de référence (REF),
a2) un circuit comparateur (62, 62A, 63, 63A, 64), relié électriquement au générateur de valeur de référence (61), pour mesurer la tension d'alimentation (U) ou le courant d'alimentation et pour comparer la valeur mesurée à la valeur de référence (REF) ainsi que pour en déduire un signal binaire de comparateur (CS) qui prend son premier état logique lorsque la valeur mesurée de la tension d'alimentation (U) ou du courant d'alimentation est inférieure à la valeur de référence (REF) et qui prend son second état logique lorsque la valeur mesurée de la tension d'alimentation (U) ou du courant d'alimentation est supérieure ou égale à la valeur de référence (REF), et
a3) des moyens, reliés électriquement au circuit comparateur (62, 62A, 63, 63A, 64), destinés à produire des impulsions de commande (P) lorsque le signal de comparateur (CS) est dans son premier état logique,
et dans lequel
b) il est prévu un régleur de puissance (7) qui est relié au régulateur (6) par l'intermédiaire d'une voie de transmission pour transmettre les impulsions de commande (P, S) et qui alimente l'émetteur (3) en un courant de commande (T) pour commander sa puissance d'émission, le courant de commande (T) dépendant d'une intégrale par rapport au temps des impulsions de commande (P, S) reçues du régulateur (6) dans une fenêtre temporelle prescrite.

9. Dispositif selon la revendication 8, dans lequel le régleur de puissance (7) contient un intégrateur (72) qui produit un courant d'intégrateur (I2) qui correspond à l'intégrale par rapport au temps et qui forme au moins une partie du courant de commande (T) du régleur de puissance (7).

10. Dispositif selon la revendication 7 et l'une des revendications 8 et 9, dans lequel il est prévu une voie de transmission commune pour transmettre aussi bien les impulsions de commande (S) que des signaux de mesure du capteur sous forme de signaux électromagnétiques.

11. Dispositif selon la revendication 6, dans lequel le régulateur (6) contient un générateur de valeur de référence (61) qui fournit la valeur de référence (U_{Ref}), un différenciateur (12) qui détermine la différence de régulation (ΔU) à partir de la tension d'alimentation (U'_{SP}) ou du courant d'alimentation et de la valeur de référence (U_{Ref}) et un modulateur MID (14) qui convertit la différence de régulation (ΔU) en un signai à modulation d'impulsions en durée (S_{PWM}) pour régler la puissance d'émission de l'émetteur (3).

12. Dispositif selon la revendication 11, dans lequel le modulateur MID (14) contient un générateur de modulation (20), un différenciateur (18) et un comparateur (19), l'entrée positive du différenciateur (18) constituant l'entrée du modulateur MID (14), la sortie du comparateur (19) branché du côté aval du différenciateur (18) constituant la sortie du modulateur MID (14) et l'entrée négative du différenciateur (18) étant reliée à la sortie du générateur de modulation (20).

13. Dispositif selon la revendication 12, dans lequel l'amplitude de la tension de modulation générée (U_{Mod}) du générateur de modulation (20) peut être réglée de telle sorte que le modulateur MID (14) produit un signal de commande MID (S_{PWM}) seulement dans une certaine plage autour de la valeur de référence prescrite (U_{Ref}).

14. Dispositif selon la revendication 12 ou la revendication 13, dans lequel il est prévu comme générateur de modulation (20) un générateur de signal en dents de scie.

15. Dispositif selon la revendication 12 ou la revendication 13, dans lequel il est prévu comme générateur de modulation (20) un générateur de signal triangulaire.

16. Dispositif selon la revendication 12 ou la revendication 13, dans lequel il est prévu comme générateur de modulation un générateur qui produit un signal de modulation qui est asymétrique et ressemblant à un signal triangulaire et qui est composé à partir de fonctions exponentielles.

17. Dispositif selon l'une des revendications 11 à 16, dans lequel le régulateur (6) contient un diviseur de tension (11) qui est relié au récepteur (4) et au différenciateur (12) et dont la tension de sortie (U'_{SP}) réduite par rapport à la tension de sortie (U_{SP}) du récepteur (4) se trouve à l'entrée négative du différenciateur (12).

18. Dispositif selon la revendication 7 et l'une des revendications 11 à 17, dans lequel il est prévu un dispositif mélangeur numérique (15) qui est relié à une sortie du modulateur MID (14) et à une sortie du consommateur (2) et qui produit un signal mixte (S_{PWMD}) à partir d'au moins un signal de données (S_{D}) du consommateur (2) et du signal MID (S_{PWM}) du modulateur MID (14).

19. Dispositif selon la revendication 18, dans lequel il est prévu comme dispositif mélangeur (15) un multiplexeur.

20. Dispositif selon l'une des revendications 6 à 19, dans lequel la sortie du récepteur (4) passe par un tampon.

21. Dispositif pour l'alimentation d'un consommateur électrique (2) en une tension d'alimentation électrique (U_{S}), qui comporte
a) un émetteur (3) pour émettre un rayonnement électromagnétique (R),
b) un récepteur (4) pour convertir le rayonnement électromagnétique (R) reçu de l'émetteur (3) en une tension d'alimentation électrique (U_{S}) pour le consommateur (2), et
c) un régulateur (6) qui mesure la tension d'alimentation (U_{S}) et compare sa valeur mesurée à une valeur de référence prescrite (U_{Ref}) et qui produit en fonction de cette comparaison un signal de commande (S) pour régler la puissance d'émission de l'émetteur (3),
et dans lequel le régulateur (6) contient un diviseur de tension (11), un différenciateur (12) et un modulateur MID (14), le diviseur de tension (11) étant relié en entrée à la sortie du récepteur (4) et en sortie à une entrée négative du différenciateur (12) dont l'entrée positive est reliée à la sortie du générateur de valeur de référence (61) et dont la sortie est reliée à l'entrée du modulateur MID (14), et le modulateur MID (14) est relié en sortie à un dispositif mélangeur numérique (15) dont l'autre entrée est reliée au consommateur (2) et à la sortie duquel est présent un signal mixte (S_{PWMD}).
